# EUROPÄISCHE PATENTANMELDUNG

(11) **EP 1 281 595 A2**
(43) Veröffentlichungstag der Anmeldung: **05.02.2003**
(21) Anmeldenummer: 02016645.0
(22) Anmeldetag: 25.07.2002
(51) Int. Cl.: B62B 9/26, B62B 7/08

(54) **Zusammenklappbarer Schiebewagen für Kinder und/oder Puppen**

(30) Priorität: 26.07.2001 DE 20112118 U
(71) Anmelder: Trends for Kids Vertriebs GmbH, 84030 Ergolding (DE)
(72) Erfinder: Beger, Udo, 84030 Ergolding (DE)
(74) Vertreter: Eichstädt, Alfred, Dipl.-Ing.

(57) **Zusammenfassung**

Bei einem zusammenklappbaren Schiebewagen für Kinder und/oder Puppen besteht das Wagengestell (1) im wesentlichen aus zwei schräg ansteigend verlaufenden Gestellholmen (2) mit mindestens einem Vorderrad und daran angelenkten hinteren Stützstreben (4) mit Hinterrädern. Die Stützstreben lassen sich nach vorne mittels eines verwindungssteifen Rahmens (15) bewegen, der vorderseitig an den Gestellholm oder an einen Querverbindungsteil (11) angelenkt ist und hinten ein Brückenteil (9) aufweist, das anhebbar ist, wobei eine Mitkopplung der Stützstreben über Kopplungsstangen erfolgt.

## Beschreibung

Die vorliegende Erfindung betrifft einen zusammenklappbaren Schiebewagen für Kinder und/oder Puppen, der nach dem Zusammenklappen relativ wenig Raum einnimmt, um die Aufbewahrung und den Transport des Schiebewagens zu erleichtern.

Die Erfindung umfasst insbesondere solche Schiebewagen, die als sogenannte Sportwagen in drei- und vierrädrigen Ausführungen bekannt sind, ist aber auf diese nicht beschränkt. Ein zusammenklappbarer dreirädriger Sportwagen mit einem Wagengestell, das zwei vordere, spiegelbildlich angeordnete, von vorn nach hinten ansteigend verlaufende, durchgehende oder aus miteinander verbundenen Abschnitten gebildete Gestellholme aufweist, ist aus der DE 298 01 117 U1 bekannt. An jedem Gestellholm ist ein oberes Schwenklager für jeweils eine hintere Stützstrebe mit einem unteren Rad vorgesehen, die mit dem jeweiligen Gestellholm im aufgestellten Zustand des Wagengestells ein aufgestelltes Dreieck bildet und in Richtung des Gestellholms verschwenkbar ist. In eine, aus den unteren Enden der Gestellholme geformten vorderen Gabel ist ein Vorderrad eingesetzt. Die zwei hinteren Räder sind auf einer verbindenden Achse seitlich vorstehend an den Stützstreben vorgesehen. Ein Schiebebügel mit Schiebegriff verbindet die beiden Gestellholme obenseitig, so dass eine Person den Wagen hierüber schieben kann. Zwischen den Gestellholmen und den Stützstreben ist ein Sitzeinsatz vorgesehen, der im Ausführungsbeispiel aus Tuch besteht. Dieser Sitzeinsatz ist an den Schrägholmen befestigt. Unterhalb des Sitzeinsatzes ist ein Bodenverbindungsgestell zwischen den beiden Stützstreben und einem Ankopplungspunkt an einer vorderen Querstrebe zwischen den Gestellholmen vorgesehen. Dieses Bodenverbindungsgestell weist einen vorderen Gestellteil auf, der schwenkbar an dem mittleren Abschnitt der vorderen Querstrebe angebracht ist. Ferner weist das Bodenverbindungsgestell einen hinteren Gestellteil auf, der an den Stützstreben schwenkbar angelenkt ist. Der vordere und der hintere Teil sind über Schwenkgelenke miteinander verbunden, so dass durch Anheben des Bodenverbindungsgestells im Bereich der etwa mittig vorgesehenen Schwenkgelenke dieses zusammenklappbar ist, wobei gleichzeitig die beiden Gestellteile des Bodenverbindungsgestells nach oben schwenken und sich aufeinander zu bewegen, ebenso wie die Hinterräder in Richtung des Vorderrades.

Die bekannte Lösung gestattet zwar ein Zusammenfalten des Schiebewagengestells derart, dass die Stützstreben zu den vorderen Stegholmen hin verschwenkt werden. Dies ist aber nur dann möglich, wenn die die Bodenverbindungsteile miteinander verbindenden Schwenkgelenke angehoben werden, d.h. beidseitig müssen die Schenkel untergriffen werden, um die Schwenkbewegung zunächst einzuleiten, sodann kann durch Druck auf den hinteren Verbindungsbügel des hinteren Bodenverbindungsteils das Kinderwagengestell zusammengefaltet werden.

Aufgabe der Erfindung ist es, das Zusammenfalten des gattungsgemäßen Schiebewagens nur mit einer Hand zu ermöglichen, auch dann, wenn auf einem Träger Sitz- und/oder Liege- und/oder Transporteinsätze vorgesehen sind, und darüber hinaus die Spreizverbindung im aufgestellten Zustand des Wagengestells zu verbessern.

Gelöst wird die Aufgabe durch Ausgestaltung eines zusammenklappbaren Schiebewagens für Kinder und/oder Puppen mittels eines Wagengestells, das die im Anspruch 1 angegebenen Merkmale aufweist.

Es ist ersichtlich, dass durch die angegebene konstruktive erfinderische Ausgestaltung mit einem einzigen Handgriff ein aufgestellter Kinderwagen zusammengeklappt werden kann. Hierzu ist es lediglich erforderlich, am Brückenteil des Rahmens anzufassen und diesen nach oben zu ziehen. Durch die Mitkopplung über die Kopplungsstangen schwenken dabei die Stützstreben in Richtung der vorderen Gestellholme und gelangen bei entsprechender Dimensionierung so dicht aneinander, dass der zusammengeklappte Schiebewagen nur noch einen geringen Stauraum zur Aufbewahrung benötigt. Dieser Raum lässt sich noch weiter verkleinern, indem - wie auch aus dem vorgenannten Stand der Technik bekannt - der Schiebebügel, der an den Gestellholmen befestigt ist, beispielsweise im Bereich der Anlenkung der Stützstreben nach vorn verschwenkt werden kann.

Der massiv ausgebildete Rahmen ermöglicht darüber hinaus, dass der Brückenteil gleichzeitig als Aufhängeteil verwendet werden kann, so dass ein zusammengeklappter Kinderwagen hierüber einfach auf einen Wandhaken aufgehängt werden kann. Der Rahmen kann ferner als Träger für einen ansteckbaren oder anklippbaren Kindersitz verwendet werden.

Durch die gegebene Mitkopplung über die Kopplungsstangen ist nicht nur beim Zusammenklappen sondern auch beim Aufstellen eine zwangsweise Bewegungsübertragung gegeben. Wird auf den Brückenteil des Rahmens gedrückt, so werden die Gestellholme und die Stützträger voneinander weg bewegt und gelangen in die Spreizstellung, die der normalen Gebrauchsstellung entspricht. Durch einen Abwinklungsteil an der Stützstrebe, oder aber auch durch einen Anschlag am Drehgelenk für die Stützstrebe, kann dabei der Schwenkweg der Stützstreben nach hinten begrenzt werden. Gleichzeitig ist er aber auch durch den Rahmen selbst begrenzt, der beim Herunterdrücken beispielsweise mit einem Anschlag auf die Oberkante einer Kopplungsstange greift. Es können aber auch an den hinteren Stützstreben Arretierungseinrichtungen vorgesehen sein, in die selbsthaltend und durch erhöhten Kraftaufwand wieder lösbar die Längsstreben des Rahmens einrasten. Solche Arretierungseinrichtungen sind federnde Schellen, die beispielsweise die Längsstrebe, die aus einem Rohr besteht, über die Hälfte umgreifen, wobei die Federkraft der Schenkel die Arretierungskraft bestimmt. Es kann aber auch eine zusätzliche Sicherung vorgesehen sein, um im aufgestellten Zustand ein unbeabsichtigtes Zusammenklappen durch Anheben des Rahmens zu verhindern, zu welchem Zweck beispielsweise an mindestens einem der Längsstreben ein Haken angebracht ist, der über eine Kopplungsstange schwenkbar ist.

Grundsätzlich kann der Rahmen, wenn er für weitere Zwecke nicht benutzt wird, in einer Schrägstellung nach oben und nach hinten verlaufend an den Gestellholmen oder einer verbindenden Querstrebe angelenkt sein. In diesem Fall muss die Übersetzung durch die Kopplungsstange so gewählt werden, dass bei einem kürzeren Schwenkweg des Rahmens ein Einschwenken der Stützstrebe in Richtung der Gestellholme in gewünschter Weise sichergestellt ist.

Der erfindungsgemäß vorgesehene Rahmen und seine Koppelfunktion zwischen Gestellholmen und Stützstreben über die Kopplungsstangen haben weiterhin den Vorteil, dass der Rahmen zugleich für einen Ablagekorb oder einen Trägerrahmen für einen rückseitigen Funktionseinsatz verwendet werden kann. Der Korb kann aus einem Netz bestehen, das am Rahmen befestigt ist. Es ist aber auch eine wannenförmige einteilige Ausführung verwendbar, wenn diese am oberen umlaufenden Rand rahmenförmig ausgebildet ist und Drehlager für die verbindende Kopplungsstangen hieran vorgesehen sind. Der Rahmen braucht auch nicht die hinteren Stützstreben nach hinten zu überstehen, er kann auch davor enden. Zur besseren Platzausnutzung und auch im Hinblick auf eine optimale Aufhängfunktion ist es jedoch empfehlenswert, wenn der Rahmen die hinteren Stützstreben übersteht. Dies erleichtert auch die Anbringung einer Arretiervorrichtung, wenn eine Arretierung in der Aufstellposition gegeben sein soll. Diese kann allerdings auch an den Kopplungsstangen vorgesehen sein, wodurch eine Arretierung an dieser durch einen das Drehlager an der Längsstrebe überstehenden Teil sichergestellt ist. Die Arretiervorrichtung kann neben dieser Funktion auch zugleich die Schwenkbegrenzungsfunktion wahrnehmen.

Die durch die Erfindung ermöglichte Funktion bleibt auch dann erhalten, wenn ein Träger oder Trägerrahmen für einen oder mehrere Einsätze vorgesehen ist und dieser entsprechend der angegebenen Lehre in Anspruch 7 ausgebildet und angeordnet wird.

Durch die gegenläufige verschiebliche Anordnung zweier Trägerrahmen und deren Verschiebbarkeit ermöglicht die Erfindung die Nutzung in zwei Gebrauchspositionen. In der einen Gebrauchsposition ist der Träger auf eine maximale Länge verlängert, so dass jeweils in ihren Endbereichen, beispielsweise in Reihe hintereinander, zwei Kinderwagensitzaufsätze daran befestigt werden können, so dass z. B. die Kinder hintereinander sitzen. Es ist aber auch möglich, in der gestreckten Gebrauchsstellung einen Kinderwagensitzaufsatz mit einem Kinderwagenliegeaufsatz zu kombinieren, wobei der Kinderwagensitzaufsatz vor dem Kinderliegewagenaufsatz angeordnet werden sollte, und zwar in Fahrtrichtung des Schiebewagens gesehen, um keine Schwerpunktsverlagerung über die Vorder- oder Hinterräder des Wagengestells zu bewirken. In der zweiten Gebrauchsstellung sind die beiden Trägerrahmen aufeinander zu in die Endposition verbracht. In dieser Position können beispielsweise auch zwei Kinderwagensitzaufsätze mit den Rückenlehnen in der Mitte aneinander liegend befestigt werden. Eine Tandemanordnung kann bei entsprechender schwenkbeweglicher Ausbildung der Rückenlehnen und eventueller anderer Elemente der Aufsätze zusammengelegt werden, so dass die Gesamtlänge beispielsweise die Radabstandslänge der vorderen zu den hinteren Rädern im zusammengeklappten Zustand des Fahrgestells nicht oder nicht wesentlich überschreitet. Es ist also möglich, einen an einem Kinderwagengestell montierten Trägerrahmen für die Mehrfachnutzung zu belassen. Die Trägerrahmen sind nicht hinderlich, wenn das Wagengestell in bekannter Weise zusammengeklappt wird. Bei gleichzeitiger Verkürzung des Trägerrahmens nimmt dabei die Gesamtanordnung in der zweiten Gebrauchsstellung nicht wesentlich mehr Platz ein als ein herkömmlicher Kinderwagen mit nur einem einzigen Kinderwageneinsatz bzw. -aufsatz. Dieses gilt für Puppenwagen gleichermaßen.

Die Vielseitigkeit der Nutzung des Trägerrahmens ist darüber hinaus ersichtlich. Es kann beispielsweise auch der Trägerrahmen dazu benutzt werden, um zum einen ein Kleinkind transportieren zu können und zum anderen auch einen Aufsatz aufzunehmen, der als Ablageaufsatz mitgeführt oder aber auch als Einkaufskorb genutzt werden kann. Ferner können durch quadratisch angeordnete Fixpunkte an dem Rahmen zur Aufnahme eines Aufsatzes ein Sitzaufsatz oder ein anderer Transport- oder Korbaufsatz oder Liegewageneinsatz zum einen in Fahrtrichtung und zum anderen entgegengesetzt der Fahrtrichtung des Schiebewagens befestigt sein. Universelle Variationen sind möglich.

Eine relative Verschiebemöglichkeit besteht darin, dass die Längsholme der Trägerrahmen Hohlrohre und im Querschnitt so dimensioniert sind, dass sie ineinandersteckbar sind, so dass sie teleskopförmig zusammengeschoben und auch herausgezogen werden können. Es versteht sich dabei von selbst, dass entsprechende Fixiermittel vorzusehen sind, um das gänzliche Herausziehen zu blockieren.

Diese Blockiermittel können federbelastete vorstehende Sperransätze sein, die in Deckung verbrachte Arretierungslöcher an beiden Holmteilen greifen. Es ist aber auch möglich, zwei Doppelrohrführungen übereinander anzuordnen und in beide parallelen Rohre jeweils die Längsholme der Trägerrahmen gegenläufig hin einzuschieben. In der jeweiligen Gebrauchsposition sind sie beispielsweise mittels einer Quersicherung, die ein federbelasteter Arretierungsbolzen der beschriebenen Art sein kann, gesichert, der durch eine Fixierungsbohrung in eine der beiden Doppelrohrführungen einrastet. Es versteht sich dabei von selbst, dass die Doppelrohrführung an den Fixpunkten im Wagengestell befestigt sein muss. Die Doppelrohrführung kann aus zwei übereinander angeordneten Rohren oder aber auch aus zwei nebeneinander liegenden Rohren bestehen. Entsprechend sind dann die Trägerrahmen mit unterschiedlicher lichter Weite auszubilden.

Bei einer anderen Ausführungsform sind spiegelbildlich angeordnet baugleiche Trägerrahmen vorgesehen, die übereinander liegen und durch Führungselemente miteinander gekoppelt sind. Diese sind an den Längsholmen des einen Trägerrahmens befestigt und gleiten mit einem Führungsteil auf den zweiten korrespondierenden Holm, während am anderen Endbereich genau die umgekehrte Anordnung vorgesehen ist, so dass eine relative Verschiebung einerseits und andererseits eine Lagefixierung zueinander möglich sind. Die Führungen können dabei so angeordnet sein, dass der Auszieh- und der Zusammenschiebeweg durch den Abstand der Längsholme zwischen den beiden Querholmen eines Trägerrahmens definiert ist.

Werden die Aufsätze an dem Trägerrahmen selbst befestigt, müssen entsprechende Befestigungseinrichtungen oder korrespondierende Teile an den Längsholmen vorgesehen sein. Werden die Aufsätze hingegen an den Querholmen befestigt, so können diese als Befestigungsmittel selbst herangezogen werden, so dass eine einfache Aufschiebebefestigung mit Schellensicherung möglich ist. Hier eröffnen sich dem Fachmann diverse Möglichkeiten der lösbaren und verriegelbaren Befestigung der Aufsätze.

Es ist ersichtlich, dass bei erfindungsgemäßer Anordnung eines solchen Trägers nach dem Zusammenschieben und Zusammenklappen der Sitzaufsätze eine kompakte Einheit im zusammengefalteten Zustand gegeben ist, die in etwa der Größe entspricht, die normalerweise ein einzelner Sitzeinsatz im zusammengeklappten Zustand einnehmen würde. Somit ist es auf einfache Weise möglich, auch einen Tandemkindersportwagen zusammenzulegen und in einem Kofferraum eines Personenkraftwagens zu verstauen.

Um ein leichteres Zusammenklappen zu ermöglichen, kann auch ein zusätzlicher Verbindungsträgerrahmen vorgesehen sein, bei dessen Bedienung das Zusammenklappen des Gestells bewirkt wird, wobei unabhängig davon der Träger zusammenschiebbar ist und die auf ihn montierten Teile zusammengelegt werden können. Ein Betätigungsrahmen kann auch mit einem höher gelegenen Fixierrahmen gekoppelt sein, an dem der Träger befestigbar ist.

Vorteilhafte Weiterbildungen der Erfindung und konstruktive Details sind in den Unteransprüchen im einzelnen angegeben.

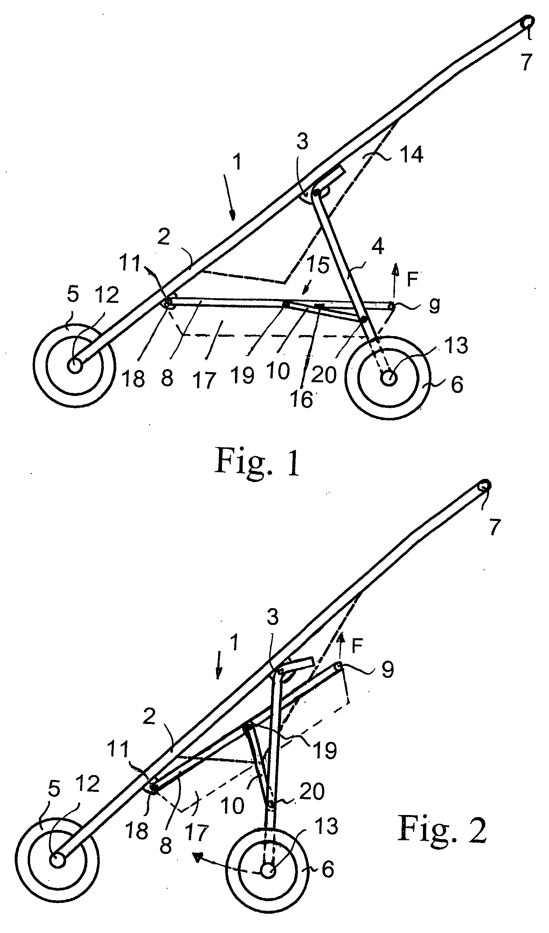

Die Erfindung wird nachfolgend anhand eines in den Figuren 1 und 2 der Zeichnung schematisch dargestellten Ausführungsbeispiels und einer perspektivischen Darstellung eines Kinderwagens mit einem Träger für zwei Sitzeinsätze ergänzend erläutert.

In Figur 1 ist in schematischer Darstellung ein beispielsweise dreirädriger Kinderwagen in der Seitenansicht dargestellt, so dass nur ein Gestellholm 2 und eine Stützstrebe 4 sichtbar ist. Dieser Schiebewagen weist ein Wagengestell 1 auf, das im wesentlichen aus einem Gestellholmpaar 2 besteht, das obenseitig durch einen Schiebebügel 7 miteinander verbunden ist, so dass der Schiebewagen von einer Person geschoben werden kann. Am unteren Ende ist in einer Gabel ein einziges Vorderrad 5 auf einer Achse 12 drehbar gelagert. Im oberen Bereich, oberhalb etwa der Mitte der Gesamtlänge des Gestellholms 2, ist an beiden Gestellholmen 2 jeweils ein Schwenklager 3 für eine Stützstrebe 4 vorgesehen, die einen abgewinkelten oberen Abschnitt aufweist, der in der dargestellten Position sich an der Unterseite des Gestellholms 2 abstützt und damit den Schwenkweg begrenzt. Zwischen den Gestellholmen 2 und Stützstreben 4 ist ein Sitzeinsatz 14 eingefügt, der gestrichelt gezeichnet ist und beispielsweise aus Tuch besteht. Der Sitzeinsatz 14 ist an den Gestellholmen befestigt. Im unteren Bereich der Gestellholme ist jeweils ein Drehlager bzw. an einer Querstrebe ein solches Drehlager 18 vorgesehen, an dem die Längsstreben 8 oder eine vorne diese verbindende Verbindungsstrebe angelenkt. Die Längsstreben 8 sind Bestandteil eines Rahmens 15, der hinten einen Brückenteil 9 aufweist. Der Rahmen 15 ist in sich verwindungssteif ausgeführt und trägt im wesentlichen zur Stabilität des Wagengestells bei. Erfindungsgemäß sind an den beiden Längsstreben 8 außenseitig, etwa in der Mitte, an Drehlagern 19 Kopplungsstangen 10 verschwenkbar angelenkt, die mit ihren zweiten Enden schwenkbeweglich an Drehlagern 20 an den Stützstreben angelenkt sind. Auf die Oberseiten der beiden parallel verlaufenden Kopplungsstangen 10 greift jeweils ein Mittel 16 in Form eines Ansatzes auf und begrenzt dadurch automatisch den Schwenkwinkel des Rahmens 15 nach unten. Wird der Rahmen 15 in diese dargestellte Position durch Druck auf den Brückenteil verbracht, ist bereits eine stabile Aufstellposition des Kinderwagens 1 hergestellt und der Wagen kann geschoben werden. Zur Sicherung der Aufstellposition kann entweder ein Bügel über die Gestellholme 2 und die zugeordneten abgewinkelten Ansätze der Stützstreben 4 aufgeschoben werden oder aber auch eine Arretiereinrichtung für jede der Längsstreben 8 des Rahmens 15 an den Stützstreben oder an den Kopplungsstangen 10 vorgesehen sein. Die Dimensionierung kann so aufeinander abgestimmt werden, dass im aufgestellten Zustand die Kopplungsstangen 10 deckungsgleich mit den Längsstreben 8 verlaufen.

Um den Kinderwagen nun in die zweite Gebrauchsstellung, in der der Kinderwagen verstaut werden soll, zu verbringen, ist es jetzt lediglich erforderlich, eine Zugkraft F auf den Brückenteil 9 nach oben angreifen zu lassen. Durch die gegebene Mitkopplung schwenken dabei automatisch - wie aus Figur 2 ersichtlich ist - die Stützstreben 4 nach vorne in Richtung der Gestellholme 2, bis die Räder das Gestänge gegen entsprechende Teile an den Gestellholmen anschlagen und den Weg begrenzen. Es ist ersichtlich, dass dabei der Brückenteil 9 eine obere Stellung einnimmt und hier auch zur Aufhängung mit benutzt werden kann. So ist es möglich, einen zusammengefalteten Kinderwagen der angegebenen Bauart mit Hilfe des Brückenteils auch auf Wandhaken aufzuhängen.

Die Darstellung zeigt ferner, dass an dem Rahmen 15 ein Kinderwagenablagekorb 17 angebracht ist. Der Rahmen hat also gleichzeitig Doppelfunktion und dient einerseits zur Einhandbetätigung für das Zusammenfalten des Kinderwagens und zum anderen als Träger für den Ablagekorb. Der Ablagekorb kann ein Netz oder aber auch wannenförmig ausgebildet sein, dies liegt im Ausgestaltungsbelieben. Ferner kann der Rahmen 15 auch als Träger für einen Funktionseinsatz dienen und entsprechend die Stützstreben hinten überstehen. Die Tragefunktion kann mit oder ohne zusätzliche Kippsicherungen an der Rückseite des Kinderwagens realisiert werden, wie sie z.B. aus der DE 200 10 213 U1 bekannt sind.

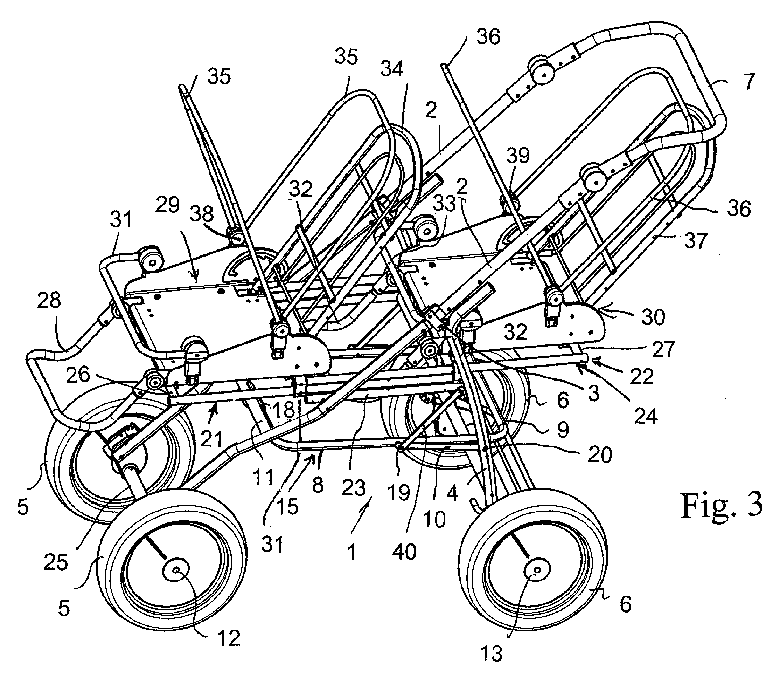

Der in Figur 3 in der Perspektive dargestellte Kinderwagen besteht aus schräg verlaufenden vorderen Holmenpaaren 2, die spiegelbildlich ausgeführt sind. Vorderseitig sind sie über einen Querverbindungsteil 25 miteinander verbunden, durch den die Radachse 12 hindurchgeführt ist. Obenseitig ist über Schwenkgelenke ein Schiebebügel 7 vorgesehen, der zugleich den oberen Abstand der Holme 2 definiert. An der Radachse 12 sind seitlich Räder 5 vorgesehen, deren äußeres Abstandsmaß geringer ist als die lichte Weite zwischen den hinteren Rädern 6, so dass sie beim Einschwenken in den von den hinteren Rädern 6 gebildeten Zwischenraum hineingreifen können, wie später noch ausgeführt wird. Oberhalb der Mitte der Längsholme 2 sind Schwenklager 3 für Stützstreben 4 vorgesehen, die in der dargestellten Aufstellposition mit den schräg verlaufenden Gestellholmen 2 ein Dreieck bilden. Die Räder 6 sind durch eine Querachse 13 miteinander verbunden, die die unteren Enden der Stützstreben 4 miteinander verbindet und auf deren vorstehenden Enden die Räder 6 mit den Naben aufsteckbar sind.

Um das Wagengestell auf einfachste Weise zusammenfalten zu können, ist ein U-förmiger Rahmen 15 aus Längsstreben 8 vorgesehen, die über ein Brückenteil 9 rückseitig miteinander verbunden sind. Der Rahmen 15 ist mittels eines Gelenkes 18 an einem Querholm 11, der zwischen den beiden Gestellholmen 2 angeordnet ist, angelenkt. Im hinteren Abschnitt der Längsstreben 8 sind Kopplungsstangen 10 jeweils mittels Lagerbolzen 19 angelenkt. Diese Kopplungsstangen 10 sind wiederum an den Stützstreben 4 mittels Lagerbolzen 20 angelenkt und hieran gesichert. Es ist ersichtlich, dass beim Hochziehen des Brückenteils 9 automatisch die Stützstreben 4 nach vorne geschwenkt werden. Die abgestimmte Positionierung der Befestigungspunkte und die Länge der Kopplungsstangen 20 definieren dabei den Bewegungsweg. So ist es möglich, ein Zusammenfalten des Wagengestells durch Hochziehen am Brückenteil 9 zu bewirken. Dieses Gestell weist darüber hinaus die Besonderheit auf, dass an dem Lagerbolzen 19 auch eine Mitnahmestange 40 (an beiden Seiten vorgesehen) schwenkbar angebracht ist, die ihrerseits an den hinteren Enden jeweils eines Längsträgers 23 angelenkt ist, der seinerseits mit dem anderen vorderen Ende an den Gestellholmen 2 angelenkt ist und förmlich parallel zu den Längsstreben 8 im aufgestellten Zustand des Wagengestells verläuft. An diesen Längsträgern 23 ist der Träger 22 mit dem Trägerrahmen 21 oder dem Trägerrahmen 24 befestigt, während der paarige zweite Trägerrahmen längsverschieblich gegenüber dem fixierten angeordnet ist. Die Sitze 29 und 30 sind in der Gebrauchsposition dargestellt. Es ist ersichtlich, dass die Kinder hintereinander sitzen und in Schieberichtung blicken.

Der Träger 22 besteht aus zwei übereinander angeordnete Trägerrahmen 21 und 24, die völlig gleichförmig ausgebildet sind, wobei der obere Trägerrahmen 24 gegenüber dem unteren Trägerrahmen 21 nach rechts und der untere Trägerrahmen 21 nach links relativ bewegbar sind. Im montierten Zustand ist nur der Trägerrahmen 24 gegenüber dem anderen 21 verschiebbar. Der eine Trägerrahmen 21 ist an den seitlichen Längsträgern 23 befestigt. Diese beiden spiegelbildlich angeordneten Trägerrahmen 21 und 24 weisen Längsholme auf, die durch Querholme 26 und 27 miteinander verbunden sind. Die Längsholme sind so weit beabstandet zueinander angeordnet und im ausgezogenen Zustand so lang, dass an ihnen die Kinderwagenaufsätze 29 und 30 befestigt werden können.

Um eine gegenläufige Verschiebung bei gleichzeitiger Aneinanderbindung sicherzustellen, sind Führungselemente 31 und 32 an den Enden der Schenkel befestigt, die eine gegenseitige Führung der Längsholme sicherstellen.

Auf dem Träger 22 sind zwei Kindersitzaufsätze 29 und 30 montiert. Diese sind mit Befestigungsmitteln unterseitig versehen und hierüber an den Querholmen des Trägers 22 befestigt. Hierzu weisen beide Sitzaufsätze 29, 30 unterseitig hinten U-förmige Aufschiebesicherungsteile auf, die durch Längsverschiebung des jeweiligen Aufsatzes auf nicht sichtbare Querholme und die Querholme 26, 27 aufrasten. Mittels einer schwenk- oder aufsetzbaren schellenförmigen Klippsicherung wird der jeweilige Sitzaufsatz 29 oder 30 an einem der Querholme gesichert. Die Sitzaufsätze 29 und 30 sind also hintereinander angeordnet. An den Sitzaufsätzen sind durch verstellbare Gelenke Fußrasten 28, ferner Sicherungsbügel 31 bzw. am zweiten Sitzaufsatz 30 entsprechende Teile 32 und 33 vorgesehen. Ferner ist verschwenkbar am ersten Sitzaufsatz 29 eine Rückenlehne 34 angelenkt und U-förmige Dachträger 35 bzw. 36 eines Faltdaches beim zweiten Sitzaufsatz 30. Die Rückenlehne des zweiten Sitzaufsatzes 30 ist mit dem Bezugszeichen 37 versehen. Die Schwenkgelenke für die Dachträger 35 und 36 sind mit 17 und 18 eingezeichnet. Werden die beiden Trägerrahmen 21, 24 zusammengeschoben, liegen die Längsholme 28, 32 praktisch übereinander. Die Fußstützen 28 und 32 sind vorher hochzuklappen, so dass sie das Zusammenschieben nicht behindern. Gleichsam sind auch alle anderen schwenkbaren Teile nach vorne geklappt, so dass ersichtlich ist, dass die Gesamtanordnung in eine gedrängte Verstauposition verbringbar ist. Um den Träger 22 in die zweite Gebrauchsstellung zu verbringen, ist es lediglich erforderlich, den Trägerrahmen 21 oder 24 - je nachdem welcher im Gestell fixiert ist - abzuziehen und die verschwenkbaren Teile wieder in ihrer zweiten Funktionsstellung aufzustellen.

Es ist ersichtlich, dass beispielsweise der hintere Sitzaufsatz 30 entfernt werden kann. An diese Stelle kann beispielsweise ein Behälteraufsatz treten, in dem genügend Stauraum zur Mitführung von Gut vorhanden ist. Es ist auch ersichtlich, dass der hintere Sitz umgedreht werden kann, so dass ein Kind nach vorne und das andere Kind nach hinten blicken kann. Es ist ferner ersichtlich, dass an Stelle des hinteren Sitzes auch ein Liegewagenaufsatz aufgebracht werden kann. Die Lehre der Erfindung ermöglicht dem Fachmann mannigfaltige Ausführungsformen.

### Bezugszeichenliste

- 1: Wagengestell
- 2: Gestellholme
- 3: Schwenklager
- 4: Stützstrebe
- 5: Vorderrad
- 6: hintere Räder
- 7: Schiebegriff
- 8: Längsstrebe
- 9: Brückenteil
- 10: Kopplungsstangen
- 11: Querstrebe
- 12: Achse vorn
- 13: Achse hinten
- 14: Sitzeinsatz
- 15: Rahmen
- 16: Mittel
- 17: Kinderwagenablagekorb
- 18: Drehlager (am Gestellholm)
- 19: Drehlager (an der Längsstrebe)
- 20: Drehlager (an der Stützstrebe)
- 21: Trägerrahmen
- 22: Träger
- 23: Längsträger
- 24: Trägerrahmen
- 25: Querverbindungsteil
- 26: Querholm
- 27: Querholm
- 28: Fußraste
- 29: Sitzeinsatz
- 30: Sitzeinsatz
- 31: Sicherungsbügel
- 32: Fußraste
- 33: Sicherungsbügel
- 34: Rückenlehne
- 35: Dachträger
- 36: Dachträger
- 37: Rückenlehne
- 38: Schwenkgelenk
- 39: Schwenkgelenk
- 40: Mitnahmestange

## Patentansprüche

1. Zusammenklappbarer Schiebewagen für Kinder und/oder Puppen mit einem Wagengestell (1), das mindestens aufweist:
- zwei vordere, spiegelbildlich angeordnete, von vorn nach hinten ansteigend verlaufende, durchgehende oder aus miteinander verbundenen Abschnitten gebildete Gestellholme (2),
- je ein oberes Schwenklager (3) an den Gestellholmen (2) für
- jeweils eine hintere Stützstrebe (4), die mit dem jeweiligen Gestellholm (2) im aufgestellten Zustand des Wagengestells ein aufgestelltes Dreieck bildet und in Richtung der Gestellholme (2) verschwenkbar ist,
- ein Vorderrad (5), das auf einer, die unteren Enden der Gestellholme (2) verbindenden Achse (12) vorgesehen ist,
- zwei hintere Räder (6), die an den unteren Enden der Stützstreben (4) oder auf einer verbindenden Achse (13) seitlich vorstehend drehbar gelagert sind,
- einen oberen Schiebegriff (7), der an einer Stützstrebe (4) oder an einem Gestellholm (2) befestigt oder als Schiebebügel ausgebildet ist, der die oberen hinteren Enden der Stützstreben (4) oder die der Gestellholme (2) miteinander verbindet,
- einen Sitz- und/oder Liegeeinsatz (14) zwischen den Gestellholmen (2) und/oder Stützstreben (4),
**gekennzeichnet durch**
- mindestens einen U-förmigen verwindungssteifen Rahmen (15) aus zwei Längsstreben (8) und einem, die hinteren Enden verbindenden Brückenteil (9) unterhalb des Sitzund/oder Liegeeinsatzes (14), wobei die vorderen Enden der Längsstreben (8) im unteren Bereich des Wagengestells (1) an den Gestellholmen (2) oder an einer, diese verbindenden Verbindungsstrebe angelenkt sind und die Längsstreben (8) sich nach hinten in Richtung der hinteren Stützstreben (4) erstrecken oder diese rückseitig überstehen,
- zwei Kopplungsstangen (10), die an den Längsstreben (8) zwischen den Gestellholmen (2) und den Stützstreben (4) und an den Stützstreben (4) in gleicher Höhe drehbar befestigt sind,
- Mittel (16) zum Verhindern eines Durchdrückens des Rahmens (15) gegenüber den Kopplungsstangen (10) im aufgestellten Zustand des Wagengestells (1).

2. Zusammenklappbarer Schiebewagen nach Anspruch 1, **dadurch gekennzeichnet, dass** die Längsstreben (8) vorderseitig über eine Querstrebe (11) miteinander verbunden sind und dass die Querstrebe (11) schwenkbar an den Gestellholmen (2) oder an einer Verbindungsstrebe derselben angelenkt ist.

3. Zusammenklappbarer Schiebewagen nach Anspruch 1 oder 2, **dadurch gekennzeichnet, dass**
Mittel zur lösbaren Arretierung der Längsstreben (8) an den Kopplungsstangen (10) oder an den hinteren Streben (4) in der heruntergedrückten Position des Rahmens (15) vorgesehen sind.

4. Zusammenklappbarer Schiebewagen nach Anspruch 1, 2 oder 3, **dadurch gekennzeichnet, dass** der Rahmen (15) im aufgestellten Zustand des Wagengestells (1) im wesentlichen horizontal verlaufend angeordnet ist und an diesem ein Kinderwagenablagekorb (17) befestigt oder dieser Bestandteil eines Kinderwagenablageeinsatzes ist.

5. Zusammenklappbarer Schiebewagen nach einem der vorhergehenden Ansprüche, **dadurch gekennzeichnet,**
**dass** durch Ausübung einer Zugkraft auf den Brückenteil (9) nach oben durch Mitkopplung über die Anlenkungspunkte der Kopplungsstangen die Gestellholme (2) und die Stützstreben (4) zwangsweise zusammenklappen und dass Mittel vorgesehen sind, die mindestens eine Längsstrebe (8) lösbar an einem Gestellholm (2) oder an einer, diese verbindenden Strebe im zusammengeklappten Zustand des Wagengestells halten.

6. Zusammenklappbarer Schiebewagen nach Anspruch 1, **dadurch gekennzeichnet, dass** die Abschnitte zwischen den Drehlagern (19) für die Kopplungsstangen (10) an den Längsstreben (8) und den vorderen Drehlagern (18) der Längsstreben (8) länger sind als die Längen der Kopplungsstreben (10) und dass die Kopplungsstangen (10) etwa im mittigen Bereich zwischen den Gestellholmen (2) und den Stützstreben (4) an den Längsstreben (8) angebracht sind.

7. Zusammenklappbarer Schiebewagen nach einem der vorhergehenden Ansprüche, **dadurch gekennzeichnet,**
**dass** im wesentlichen parallel zum Rahmen (15) und über diesen ein Träger (22) oder ein Längsträger (23) für die Befestigung eines solchen Trägers (22) zur Aufnahme mindestens eines Sitz- (29, 30) und/oder Liegewagenund/oder Transporteinsatzes vorgesehen ist, wobei der Träger (22) oder die Längsträger (23) an den Gestellholmen (2) angelenkt und über Mitnahmestangen (40) schwenkbeweglich mit dem Rahmen (15) verbunden sind.

8. Zusammenklappbarer Schiebewagen nach Anspruch 7, **dadurch gekennzeichnet, dass** der Träger (22) aus zwei gegeneinander teleskopartig verschiebbaren Trägerrahmen (21, 24) besteht.

9. Zusammenklappbarer Schiebewagen nach Anspruch 8, **dadurch gekennzeichnet, dass** der Träger (22) aus zwei Trägerrahmen (21, 24) aus mindestens zwei beabstandet zueinander angeordneten Längsholmen besteht, die jeweils über mindestens einen Querholm verbunden sind, wobei die Längsholme der beiden Trägerrahmen (21, 24) miteinander längsverschieblich verbunden sind, und dass an einem der Trägerrahmen (21, 24) Mittel zur Fixierung des Trägers (22) an Befestigungspunkten an Teilen des Wagengestells oder dem Längsträger (23) und an mindestens einem der beiden Trägerrahmen (21, 24) Mittel für die Aufnahme und Befestigung mindestens eines Sitz- (29, 30) bzw. Liegewagenaufsatzes oder eines Transporteinsatzes vorgesehen sind.

10. Zusammenklappbarer Schiebewagen nach Anspruch 8 oder 9, **dadurch gekennzeichnet, dass** die Längsholme der Trägerrahmen (21, 24) teleskopartig ineinander gesteckt und/oder in seitlichen Doppelrohrführungen geführt verschiebbar sind und der jeweilige Querholm außerhalb der Schiebetiefe jeweils zwischen den Längsholmen vorgesehen ist.

11. Zusammenklappbarer Schiebewagen nach Anspruch 9 oder 10, **dadurch gekennzeichnet, dass** die Längsholme jeweils über zwei Querholme starr miteinander verbunden sind, derart, dass freie Schenkel gegeben sind, deren Länge in etwa der halben Länge des jeweiligen zweiten Trägerrahmens (21, 24) entspricht, wobei die Verschiebetiefe durch die innenliegenden Querholme begrenzt ist.

12. Zusammenklappbarer Schiebewagen nach einem der Ansprüche 7, 8, 9 oder 10, **dadurch gekennzeichnet, dass** die Trägerrahmen (21, 24) übereinander liegend angeordnet sind, dass die Schenkel der einen Längsholme mit den Abschnitten der anderen Längsholme korrespondieren, zwischen denen mindestens ein Querholm vorgesehen ist, und dass die Schenkel der einen Längsholme mit den Abschnitten der anderen Längsholme korrespondieren, die miteinander über mindestens einen Querholm miteinander verbunden sind, und dass gegenpaarig an den Schenkelenden der Trägerholme Führungselemente, wie Führungsschlaufen oder Führungsringe, befestigt sind, in denen die korrespondierenden Abschnitte der Längsholme des jeweils anderen Trägerrahmens (21, 24) verschieblich gelagert sind.

13. Zusammenklappbarer Schiebewagen nach Anspruch 7, **dadurch gekennzeichnet, dass** an dem Trägerrahmen (21, 24) in Tandemanordnung zwei Sitzaufsätze (29, 30) oder Sitzeinsätze oder zwei Liegeeinsätze für zwei Kleinkinder oder Puppen oder zwei Behälteraufsätze oder Kombinationen aus zwei verschiedenen Aufsätzen vorgesehen sind.
